(19) Europäisches Patentamt

European Patent Office

Office européen des brevets

(11) **EP 1 257 047 A2**

(12) **EUROPÄISCHE PATENTANMELDUNG**

(43) Veröffentlichungstag:
**13.11.2002 Patentblatt 2002/46**

(51) Int Cl.7: **H02M 3/335**

(21) Anmeldenummer: **02100455.1**

(22) Anmeldetag: **07.05.2002**

(84) Benannte Vertragsstaaten:
**AT BE CH CY DE DK ES FI FR GB GR IE IT LI LU MC NL PT SE TR**
Benannte Erstreckungsstaaten:
**AL LT LV MK RO SI**

(30) Priorität: **09.05.2001 DE 10122534**

(71) Anmelder:
• **Philips Corporate Intellectual Property GmbH 20099 Hamburg (DE)**
Benannte Vertragsstaaten:
**DE**
• **Koninklijke Philips Electronics N.V. 5621 BA Eindhoven (NL)**
Benannte Vertragsstaaten:
**AT BE CH CY DK ES FI FR GB GR IE IT LU MC NL PT SE TR**

(72) Erfinder:
• **Dürbaum, Thomas,**
  **c/o Philips Corp. Int. Prop. Gmbh**
  **52066, Aachen (DE)**
• **Elferich, Reinhold,**
  **c/o Philips Corp.Int.Prop.Gmbh**
  **52066, Aachen (DE)**

(74) Vertreter: **Volmer, Georg, Dipl.-Ing. et al**
**Philips Corporate Intellectual Property GmbH,**
**Weisshausstrasse 2**
**52066 Aachen (DE)**

(54) **Resonanter Konverter**

(57)     Die Erfindung betrifft einen resonanten Konverter (1), der mehrere Ausgänge (7a, 7b) aufweist und der einen Transformator (4) mit einer Primärwicklung (5) und mindestens zwei Sekundärwicklungen (6a, 6b) mit unterschiedlicher Wicklungsorientierung enthält. Auf diese Weise läßt sich ein resonanter Konverter mit mehreren Ausgängen, von den zwei getrennt voneinander regelbar sind, möglichst kostengünstig ausgestalten,

Fig.1

**Beschreibung**

Die Erfindung betrifft einen resonanten Konverter.

Bei derartigen Konvertern wird eine eingangsseitig anliegende Gleichspannung zunächst zerhackt und die so entstehende als zerhackte Gleichspannung vorliegende Wechselspannung wird mittels Schaltungsteilen, die Resonanzkreiselemente enthalten, verarbeitet.

Insbesondere werden dabei auch Transformatoren eingesetzt, die eine galvanische Trennung von Eingangs- und Ausgangsseite des Konverters bewirken. Mit derartigen Konvertern lassen sich kostengünstige, kleine und leichte Stromversorgungsgeräte/Schaltnetzteile herstellen, die beispielsweise in Konsumelektronikgeräten wie Set-Top-Boxen, Satelliten-Receiver, Fernsehgeräten, Computer-Monitore, Videorecorder, Kompakt-Audioanlagen vorteilhaft einsetzbar sind. Bei diesen Anwendungen werden häufig Konverter benötigt, die aus einer Eingangsgleichspannung an mehreren Konverterausgängen mehrere Ausgangsspannungen erzeugen.

Der Erfindung liegt die Aufgabe zugrunde, einen resonanten Konverter mit mehreren Ausgängen, von den zwei getrennt voneinander regelbar sind, möglichst kostengünstig auszugestalten.

Die Aufgabe wird dadurch gelöst, dass der Konverter mehrere Ausgänge aufweist und einen Transformator mit einer Primärwicklung und mindestens zwei Sekundärwicklungen mit unterschiedlicher Wicklungsorientierung enthält.

Bei diesem Ansatz ist es möglich, einen Konverter zu realisieren, der in jedem mit einer Sekundärwicklung gekoppelten Ausgangszweig nur eine Diode (Leistungshalbleiterelement) hat; die Anzahl in den Ausgangszweigen benötigter Dioden wird somit auf ein Minimum reduziert. Zwei aus einer Eingangsspannung erzeugte Ausgangsspannungen oder Ausgangsströme lassen sich getrennt voneinander und daher mit gegenüber herkömmlichen resonanten Konvertern verbesserten Toleranzwerten auf vorgebbare Werte regeln; der erfindungsgsmäße Konverter kann darüber hinaus gleichzeitig ein oder mehrere vorgebbare Ausgangsspannungen und ein oder mehrere vorgebbare Ausgangsströme erzeu-gen. Weiterhin kann auch noch bei einem weiten Ausgangsspannungsbereich ein kostengünstiger Transformator verwendet werden, denn die Sekundärwicklungsgruppen mit unterschiedlicher Wicklungsorientierung können unterschiedliche Verhältnisse von erzeugter zugehöriger Ausgangsspannung zur Windungszahl der zugehörigen Sekundärwicklung aufweisen.

Weist der Transformator eine erste Sekundärwicklungsgruppe mit ein oder mehreren Sekundärwicklungen mit einer ersten Wicklungsorientierung und eine zweite Sekundärwicklungsgruppe mit ein oder mehreren Sekundärwicklungen mit einer zweiten Wicklungsorientierung auf, können Sekundärwicklungen galvanisch voneinander getrennt (sind) oder galvanisch miteinander gekoppelt sein, wobei im letzteren Fall die Sekundärwicklungen insbesondere mit einem Massepotential gekoppelt sind. Die Sekundärwicklungen können in Reihe geschaltet sein, wobei zwischen den Sekundärwicklungen dann Abgriffe vorgesehen sind.

Die Resonanzfrequenz des resonanten Konverters wird durch induktive und kapazitive Elemente des resonanten Konverters bestimmt, die durch ein oder mehrere Kondensatoren und/oder Spulen und der Transformatorhauptinduktivität sowie (der) Transformatorstreuinduktivitäten realisiert werden. Die Resonanzfrequenz des Konverters läßt sich insbesondere durch zusätzliche separate Spulen auch dann auf den gewünschten Wert einstellen, wenn dieser Wert mit einer bestimmten Transformatorbauform mit vorgegebener Hauphnduktivität und vorgegebenen Streuinduktivitäten allein nicht einstellbar ist.

Bei einer Ausgsstaltung des resonanten Konverter werden Schaltelemente zum Zerhacken einer Eingangsgleichspannung eingesetzt und eine Rückkopplungsschleife mit einer Regelschaltung dient zur Regelung zweier Ausgangsspannungen. Hierbei sind die Frequenz und der Tastgrad der zerhackten Eingangsgleichspannung als Stellgrössen der Regelung vorgesehen, wobei es ausreicht, lediglich für jeweils eine Gruppe von Sekundärwicklungen mit gleicher Wicklungsorientierung lediglich aus einer der zugehörigen Ausgangsspannungen ein Meßsignal für die Regelschaltung zur Verfügung zu stellen. Bei dem erfindungsgemäßen Konverter ist es ausreichend, die Sekundärwicklungen des Transformators jeweils über jeweils eine Diode und ein Ausgangsfilter mit den Konverterausgängen zu koppeln. Insbesondere lassen sich verschiedene Verhältnisse von Ausgangsspannung zu Windungszahl bezüglich zugehöriger unterschiedliche Wicklungsorientierung aufweisender Sekundärwicklungen vorsehen, so daß durch entsprechende Vorgabe dieser Verhältnisse die Verteilung der vom Konverter erzeugten Gesamtausgangsleistung beeinflußbar ist. Dabei ist ein weiter Konverterausgangsspannungpbereich mit einfachen Transformatorbauformen realisierbar.

Ausführungsbeispiele der Erfindung werden nachfolgend anhand der Zeichnungen näher erläutert. Es zeigen:

Fig.1 einen resonanten Konverter mit zwei Ausgängen,

Fig.2 eine Halbbrückenschaltung für den resonanten Konverter,

Fig.3A, 3B und 3C verschiedene Ausgangsfilter für den resonanten Konverter,

Fig.4 ein Ersatzschaltbild für den resonanten Konverter,

Fig.5 bis Fig.7 Spannungs- und Stromverläufe im resonanten Konverter,

Fig.8 bis Fig.10 verschiedene Ausgestaltungsmöglichkeiten für einen erfindungsgemäßen resonanten Konverter,

Fig.11 ein Beispiel für die Kopplung von Konverterausgängen mit der Regelschaltung des resonanten Konverters und

Fig. 12 ein Blockschaltbild für eine Ausführungsvariante der Regelschaltung des resonanten Konverters.

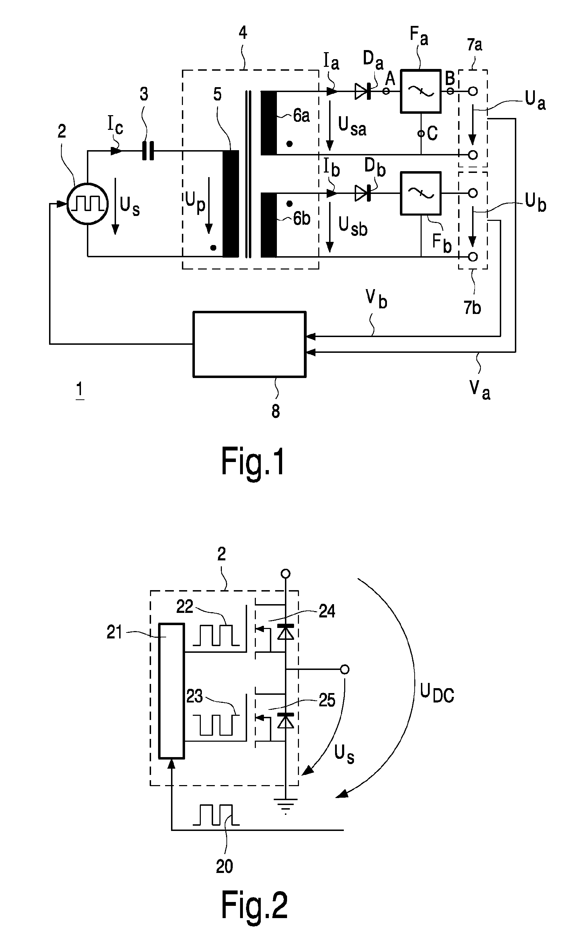

Die in Fig.1 gezeigte Schaltungsanordnung zeigt einen resonanten Konverter 1 mit einem Wechselrichter 2, der hier als Zerhacker ausgeführt ist und eine Gleichspannung (nicht dargestellt) in eine Wechselspannung, d.h. hier eine zerhackte Gleichspannung Us umsetzt. Der Wechselrichter 2 ist über einen Kondensator 3 mit einem Transformator 4 gekoppelt, der eine Primärwicklung 5 und zwei Sekundärwicklungen 6a und 6b aufweist. Die Sekundärwicklungen 6a und 6b haben unterschiedliche Wicklungsorientierungen, so dass bei einer positiven Spannung Up an der Primärwicklung 5 die an der Sekundärwicklung 6a erzeugte Spannung Usa ebenfalls positiv ist, die an der Sekundärwicklung 6b abfallende Spannung Usb dagegen bei positiver Spannung Up negativ ist. Der Transformator 4 hat einen gemeinsamen Transformatorkern sowohl für die Primärwicklung 5 als auch für die Sekundärwicklungen 6a und 6b. Ein durch den Kondensator 3 in die Primärwicklung 5 fließender Strom ist mit Ic bezeichnet.

Die Sekundärwicklung 6a ist über eine Diode Da und ein Ausgangsfilter Fa mit einem Ausgang 7a gekoppelt, an dem eine Ausgangsspannung Ua abfällt. Die Sekundärwicklung 6b ist über eine Diode Db und einen Filter Fb mit einem Ausgang 7b verbunden, an dem eine Ausgangsspannung Ub abfällt. Der Konverter 1 enthält weiterhin eine Rückkopplungschleife mit einer Regelschaltung 8, die eingangsseitig mit den Ausgängen 7a und 7b des Konverters 1 und ausgangsseitig mit dem Wechselrichter 2 gekoppelt ist. Die Regelschaltung 8 stellt in Abhängigkeit von den an den Ausgängen 7a und 7b anliegenden Spannungen Ua und Ub die Frequenz und das Tastverhältnis der vom Wechselrichter 2 gelieferten Spannung Us ein, um die Ausgangsspannungen Ua und Ub auf vorgegebene gewünschte Spannungswerte zu regeln.

Bei dem resonanten Konverter 1 stellen der Kondensator 3, die Hauptinduktivität und die Streuinduktivitäten des Transformators 4 Resonanzkreiselemente dar, die durch die Wechselspannung Us zum Schwingen angeregt werden und einen entsprechenden Verlauf des in den die Resonanzkreiselemente aufweisenden Schaltungsteiles fließenden Stromes Ic und der an der Primärwicklung abfallenden Spannung Up bewirkt. Im Fall von positiven Spannungswerten der Spannung Up wird ein Strom Ia, der durch die Diode Da zum Filter Fa fließt, generiert, und zwar für die Zeit, in der in diesem Betriebszustand die Spannung Usa größer ist als die am Eingang des Filters Fa anliegende Spannung abzüglich der Diodenflußspannung über der Diode Da. Hat die Spannung Up an der Primärwicklung 5 positive Spannungswerte, wird von der Sekundärwicklung 6b kein Strom generiert, da in diesem Fall die Diode Db sperrt.

Im Fall von negativen Spannungswerten der Spannung Up liegen eine positive Spannung Usb an der Sekundärwicklung 6b und eine negative Spannung Usa der Sekundärwicklung 6a vor. In diesem Fall wird ein Strom Ib generiert, der von der Sekundärwicklung 6b durch die Diode Db zum Ausgangsfilter Fb fließt, und zwar für die Zeit, in der in diesem Betriebszustand die Spannung Usb größer ist als die am Eingang des Filters Fb anliegende Spannung abzüglich der Diodenflußspannung über der Diode Db.

Fig.2 zeigt eine Ausführungsvariante des Wechselrichters bzw. Zerhackers 2 aus Fig.1. Ein von der Regelschaltung 8 generiertes Stellsignal 20, das hier eine Pulsfolge darstellt, wird einer Halbbrücken-Treiberschaltung 21 zugeführt, die aus dem Stellsignal 20 Steuersignale 22 und 23 für die Schaltelemente 24 und 25 generiert, die eine Halbbrückenschaltung bilden. Die Schaltelemente 24 und 25 sind als MOSFET-Transistoren ausgeführt. Die Steuersignale 22 und 23 werden Gate-Anschlüssen (Steueranschlüssen) der Transistoren 24 und 25 zugeführt. Der Wechselrichter 2 setzt eine Gleichspannung $U_{DC}$ in die Wechselspannung Us durch abwechselndes Ein- und Ausschalten der Schaltelemente 24 und 25 um. Die Gleichspannung $U_{DC}$ wird bspw. bei Stromversorgungsgeräten/Netzteilen/Ladegeräten aus der Wechselspannung eines Wechselspannungsnetzes durch Gleichrichten erzeugt.

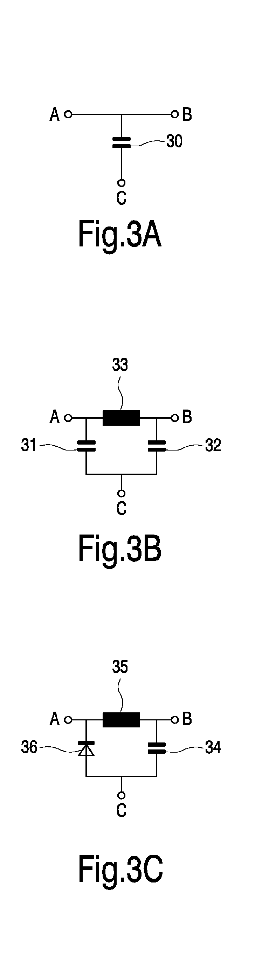

Die Fig. 3Abis 3C zeigen Ausführungsvarianten der Ausgangsfilter Fa und Fb des resonanten Konverters 1. Diese verfügen über einen Anschluß A, der mit den Dioden Da bzw. Db verbunden ist. Die Anschlüsse B und C sind mit den Ausgängen 7a bzw. 7b des Konverters 1 verbunden. Das Filter gemäß Fig.3 enthält lediglich einen Kondensator 30. Das Ausgangsfilter gemäß Fig.3B enthält zwei Kondensatoren 31 und 32 und eine Induktivität 33. Das Ausgangsfilter gemäß Fig. 3C enthält einen Kondensator 34, eine Induktivität 35 und eine Diode 36.

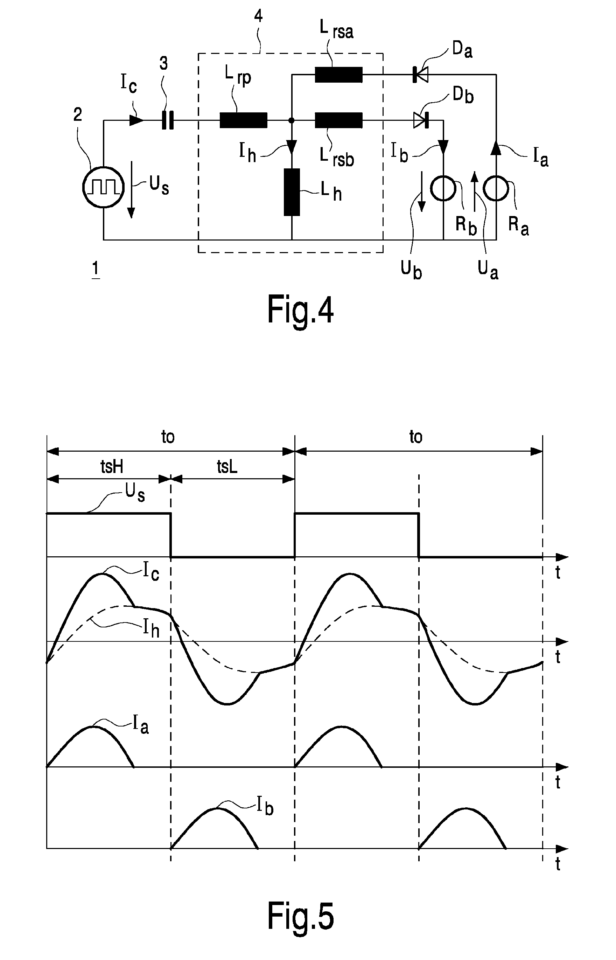

Fig.4 zeigt ein Ersatzschaltbild für den resonanten Konverter 1 aus Fig.1, bei dem der Transformator 4 durch ein Transformatorersatzschaltbild ersetzt wurde. Die elektrische Funktion des Transformators 4 kann hier im wesentlichen durch eine primärseitige Streungsinduktivität Lrp, eine Hauptinduktivität Lh, eine sekundärseitige Streuinduktivität Lrsa für die Sekundärwicklung 6a und eine sekundärseitige Streuinduktivität Lrsb für die Sekundärwicklung 6b dargestellt werden. Die Filter Fa und Fb sind hier als ideal angenommen und nicht dargestellt, ebensowenig wie die Regelschaltung 8. An die Ausgänge 7a und 7b des Konverters 1 sind Lasten Ra und Rb angeschlossen.

Die Fig. 5 bis 7 zeigen, wie durch Anpassung von Frequenz f0 bzw. der Periodendauer t0=1/f0 und des Tastverhältnisses der Wechselspannung Us einer Regelung der Ausgangsspannungen Ua und Ub ermöglicht wird Das Tastverhältnis wird hierbei durch die Zeitdauer tsH und tsL bestimmt, wobei während einer Zeitdauer tsH das obere Schaltelement 24 eingeschaltet und das untere Schaltelement 25 ausgeschaltet ist und wobei während einer Zeitdauer tsL das obere Schaltelement 24 ausgeschaltet und das untere Schaltelement 25 eingeschaltet ist. Das Tastverhältnis ergibt sich zu tsH/t0. Für zwei Zeitperioden t0 sind jeweils die Verläufe der Wechselspannung Us, des Stroms Ic durch den Kondensator 3, des Stroms Ia durch die Hauptinduktivität La des Transformators 4, des von der Sekundärwicklung 6a gelieferten Stromes Ia und des von der Sekundärwicklung 6b gelieferten Stromes Ib dargestellt. Alle Wicklungsverhältnisse bei dem zugrundeliegenden Schaltungsbeispiel gemäß der Ersatzschaltung gemäß Fig. 4 sind jeweils zu Eins angenommen; ferner gilt hier Lrsa ist gleich Lrsb.

Fig. 5 zeigt den Betriebszustand, bei der die Frequenz f0=1 /t0 auf das 1,47 fache von fr eingestellt ist, wobei fr die Resonanzfrequenz des Konverters 1 ist und sich näherungwise zu

$$fr=\frac{1}{2\pi}\sqrt{\frac{1}{C(3)[Lrp+Lh]}}$$

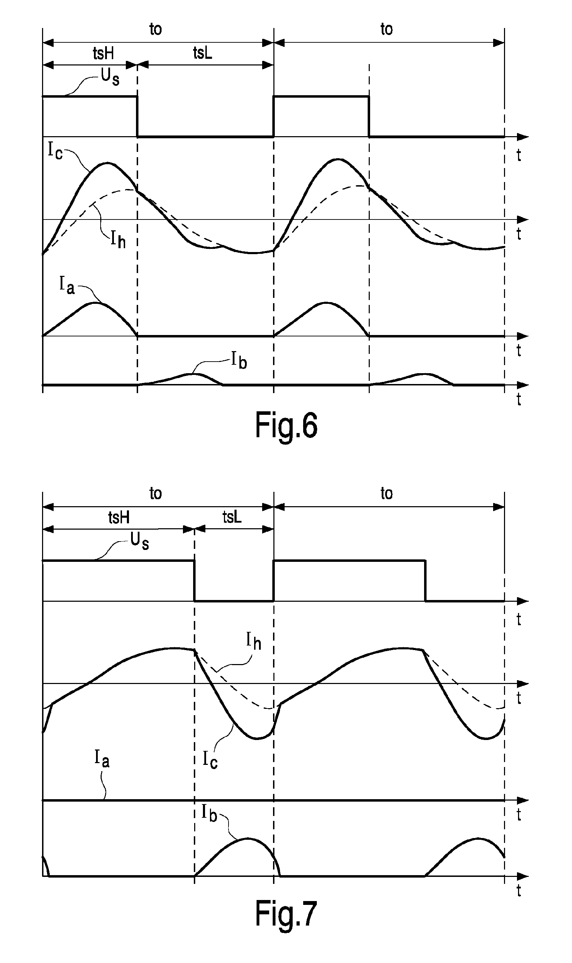

bestimmt, wobei C(3) die Kapazität des Kondensators 3 ist. Das Tastverhältnis ist im Betriebsfall gemäß Fig.5 zu 50% gewählt. In diesem Betriebszustand werden in den Zeiträumen tsH bzw. tsL Stromverläufe von Ia und Ib mit (nahezu) identischen Halbwellen während der Zeiträume tsH bzw. tsL erzeugt. Beim Betriebszustand gemäß Fig.6 ist die Frequenz f0=1/t0 das 1,53 fache von fr erhöht. Das Tastverhältnis ist auf 40% reduziert.

Gegenüber dem Betriebszustand gemäß Fig. 5 ist der Verlauf des Stroms Ia nahezu gleichgeblieben. Der Verlauf des Stromes Ib weist nun Halbwellen mit reduzierter Amplitude auf, so dass die über die Sekundärwicklung 6b zum Ausgang 7b transportierte Leistung reduziert ist. Fig.7 zeigt einen Betriebsfall mit einer Frequenz f0=1/t0 gleich dem 1,55 fachen von fr und einem Tastverhältnis von 65%. In diesem Betriebsfall ist der Strom Ia im wesentlichen auf Null reduziert und die Amplitude der Halbwellen von Ib sind gegenüber Fig.6 erhöht, so dass in diesem Betriebsfall von der Sekundärwicklung 6a keine Leistung zum Ausgang 7a, jedoch von der Sekundärwicklung 6b eine gegenüber Fig.6 erhöhte Leistung von der Sekundärwicklung 6b zum Ausgang 7b transportiert wird.

Die beispielhaften Betriebszustände gemäß der Figuren 5 bis 7 machen deutlich, dass mit der erfindungsgemäßen Konverterschaltung eine sehr variable Anpassung an unterschiedliche Belastungen der verschiedenen Konverterausgänge möglich ist. Mit dem erfindungsgemäßen Konverter lassen sich insbesondere auch bei kleinen Ausgangsspannungen und großen Ausgangsströmen geringe Toleranzen der Ausgangsspannungen erreichen.

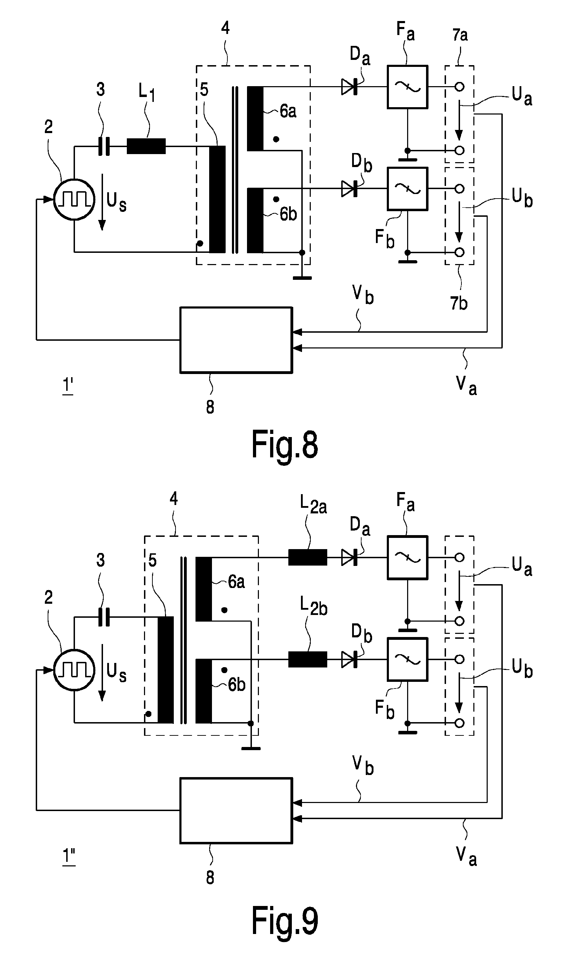

Die Fig. 8 und 9 zeigen Varianten des Konverters 1 aus Fig.1, die mit 1' und 1" bezeichnet sind in beiden Varianten sind die beiden Sekundärwicklungen 6a und 6b galvanisch miteinander gekoppelt; im vorliegenden Fall sind diese mit einem gemeinsamen Massepotential verbunden. Bei der Ausgestaltung des Konverters 1 gemäß Fig.1 sind die Sekundärwicklungen 6a und 6b galvanisch von einander getrennt. In Fig.8 ist außerdem als weitere Variante eine zusätzliche externe Induktivität L1 vorgesehen, die auf der Primärseite des Transformators 4 zwischen dem Kondensator 3 und der Primärwicklung 5 angeordnet ist und zusätzlich zu den Induktivitäten des Transformators 4 als zusätzliches induktives Resonanzkreiselement wirkt. Bei vorgegebener Bauart des Transformators 4 mit bestimmten Transformatorinduktivitäten läßt sich mit Hilfe dieser zusätzlichen Induktivität eine Anpassung der Resonanzfrequenz des Konverters durchrühren. Fig.9 zeigt zusätzliche externe Induktivitäten L2a und L2b auf der Sekundärseite des Transformators 4. Die Induktivität L2a ist zwischen der Sekundärwicklung 6a und der Diode T a angeordnet, die Induktivität L2b liegt zwischen der Sekundärwicklung 6b und der Diode Db. Auch diese beiden Induktivitäten wirken als zusätzlicher Resonanzkreiselemente und können eingesetzt werden, um die gewünschte - gegebenenfalls unsymmetrische - Leistungsverteilung zwischen den Ausgängen etwa im Nennbetrieb einzustellen. Selbstverständlich sind auch Konvertervarianten möglich, bei der sowohl auf der Primärseite des Transformators 4 als auch auf der Sekundärseite des Transformators 4 zusätzliche externe Induktivitäten vorgesehen sind.

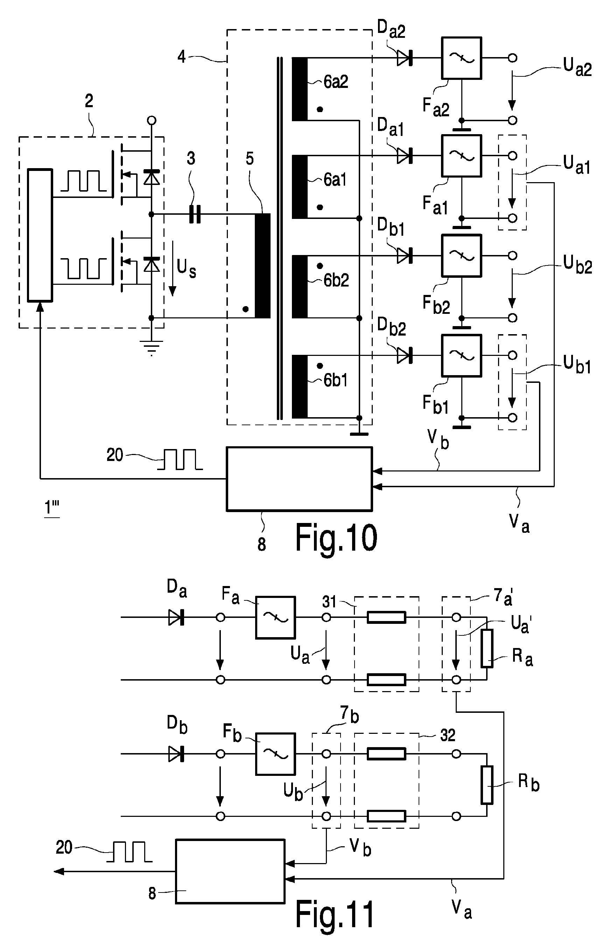

Fig.10 zeigt eine Konvertervariante 1''' mit einer größeren Anzahl Konverterausgängen. Im vorliegenden Fall weist der Konverter vier Konverterausgänge auf. Der Transformator 4 hat neben der Primärwicklung 5 nunmehr zwei Gruppen von Sekundärwicklungen mit unterschiedlicher Wicklungsorientierung (indiziert durch die Buchstaben a und b), die einerseits die Sekundärwicklungen 6a1 und 6a2 und andererseits die Sekundärwicklungen 6b1 und 6b2 enthalten. Die Sekundärwicklungen sind über Dioden Da1, Da2, Db1 und Db2 mit Ausgangsfiltern Fa1, Fa2, Fb1 und Fb2 mit den Konverterausgängen verbunden, an denen Ausgangsspannungen Ua1, Ua2, Ub1 und Ub2 anliegen. Der Regälschaltung 8 werden als Meßgrößen die Ausgangsspannungen Ua1 und Ub1 zugeführt. Die Regelschaltung 8 wertet also hier zwei Ausgangsspannungen aus, wobei die eine Ausgangsspannung Ua1 von der Sekundärwicklung 6a1 aus der Gruppe von Sekundärwicklungen mit der ersten Wicklungsorientierung erzeugt wird.

Die andere der Regelschaltung 8 zugeführte Ausgangsspannung Ub1 ist der Sekundärwicklung 6b1 aus der Gruppe der Sekundärwicklungen der entgegengesetzt gerichteten Wicklungsorientierung zugeordnet. Für jede der beiden Gruppen mit Sekundärwicklungen mit unterschiedlichen Wicklungsorientierungen wird also hier eine Meßgröße, d.h. Ausgangsspannung, ausgewertet und zur Regelung eingesetzt. Die stellt eine besonders einfache und effektive Regelung der Ausgangsspannungen des Konverters dar.

Fig.11 zeigt, dass die Regelschaltung als Meßgrößen entweder direkt die Spannungen an den Konverterausgängen oder die Spannungen an den angeschlossenen Lasten des Konverters auswertet, wobei letztere aufgrund von Spannungsabfällen an den Zuleitungen zwischen dem Konverter und den Lasten gegenüber den entsprechenden Ausgangsspannungen reduziert sind. Beide Varianten sind in Fig.11 beispielhaft dargestellt. An den Konverterausgängen liegen hier die beiden Ausgangsspannungen Ua und Ub an, an die jeweils eine Last Ra und eine Last Rb angeschlossen sind Die Verbindungsleitungen zwischen dem die Ausgangsspannung Ua liefernden Konverterausgang und der Last Ra sind hier durch einen Block 31 dargestellt. Die Verbindungsleitungen zwischen dem die Ausgangsspannung Ub liefernden Ausgang des Konverters und der Last Rb sind durch den Block 32 dargestellt.

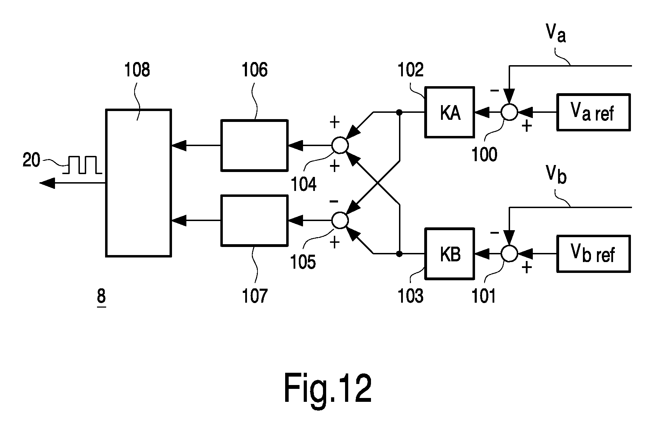

Fig.12 zeigt ein Ausführungsbeispiel zur Regelschaltung 8. Der Regelschaltung werden an ihren zwei Eingängen ein erstes Meßsignal Va und ein zweites Meßsignal Vb zugeführt, die den Ausgangsspannungen Ua und Ub bzw. Ua1 und Ub1 entsprechen. Die Meßsignale Va und Vb werden mit Referenzsignalen Varef und Vbref verglichen. Hierbei werden Subtrahierer 100 und 101 eingesetzt. Der Subtrahierer 100 liefert die Differenz Varef -Va an einen Schaltungsblock 102. Der Subtrahierer 101 liefert die Differenz Vbref -Vb an einen Schaltungsblock 103. Die Schaltungsblöcke 102 und 103 enthalten Verstärker und Normierungsschaltungen, so dass das vom Subtrahierer 100 gelieferte Differenzsignal mit einem Faktor KA und das vom Subtrahierer 101 gelieferte Differenzsignal mit einem Faktor KB multipliziert wird Es gilt hier in diesem Ausführungsbeispiel folgender Zusammenhang:

$$kA \cdot Varef \cong kB \cdot Vbref$$

Die Ausgangssignale der Schaltungsblöcke 102 und 103 werden von einem Addierer 104 und einem Subtrahierer 105 weiter verarbeitet. Der Addierer 104 addiert die Ausgangssignale der Schaltungsblöcke 102 und 103 und liefert sein Ausgangssignal an einen Frequenz-Regler 106, der beispielsweise als PID-Regler ausgeführt ist. Das vom Subtrahierer 105 gelieferte Differenzsignal wird einem Tastverhältnis-Regler 107 zugeführt, der beispielsweise auch PID-Regler ausgeführt ist. Mittels einer Signalgeneratorschaltung 108 wird nun das von der Regelschaltung 8 an den Wechselrichter 2 gelieferte Regelsignal 20 erzeugt, das hier ein pulsweitenmoduliertes Signal ist. Die Frequenz des Signals 20, die bestimmend ist für die Frequenz der Wechselspannung Us des resonanten Konverters, wird durch das Ausgangssignal des Frequenzreglers 106 eingestellt. Das Tastverhältnis des Signals 20, dass das Tastverhältnis der Wechselspannung Us bestimmt, wird durch den Tastverhältnis-Regler 107 eingestellt.

Verringert sich bei der Regelschaltung gemäß Fig.12 beispielsweise der Wert des Meßsignals Va, so dass Va < Varef wird, so führt dies einerseits zu einer Verringerung der von dem Regler 106 eingestellten Frequenz und damit entsprechend dem Verhalten eines resonanten Konverters tendenziell zu einer Erhöhung der vom resonanten Konverter erzeugten Ausgangsspannungen. Andererseits wird in diesem Fall aufgrund des erzeugten Regelfehlers aber auch eine Verkleinerung des von dem Regler 107 bestimmten Tastverhältnisses des Signals 20 bzw. der Wechselspannung Us bewirkt. Dieser Fall liegt beispielsweise bei dem Betriebszustand gemäß Fig.6 vor, wo die von der Sekundärwicklung 6a zum Ausgang 7a transportierte Leistung gegenüber der von der Sekundärwicklung 6b zum Ausgang 7b transportierten Leistung erhöht ist.

Verringert sich beispielsweise in einem anderen Fall das Meßsignal Vb bzw. die entsprechende Ausgangsspannung Ub, so führt dies ebenfalls zu einer Verringerung der Frequenz des Signals 20 bzw. der Frequenz der Wechselspannung Us. Allerdings wird in diesem Fall mittels des Reglers 107 eine Erhöhung des Tastverhältnisses des Signals 20 bzw. des Tastverhältnisses der Wechselspannung Us bewirkt, so dass sich bei diesem Betriebsfall die Leistungsverteilung so verändert, dass die zum Ausgang 7b transportierte Leistung im Vergleich zu der zum Ausgang 7a transportierten Leistung erhöht ist. Das Regelverhalten gilt entsprechend auch für die Ausführungsvarianten mit mehr als zwei Konverterausgängen.

**Patentansprüche**

1. Resonanter Konverter (1), der mehrere Ausgänge (7a, 7b) aufweist und der einen Transformator (4) mit einer Primärwicklung (5) und mindestens zwei Sekundärwicklungen (6a, 6b) mit unterschiedlicher Wicklungsorientierung enthält.

2. Resonanter Konverter nach Anspruch 1,
   **dadurch gekennzeichnet,**
   **dass** der Transformator (4) eine erste Sekundärwicklungsgruppe mit ein oder mehreren Sekundärwicklungen (6a) mit einer ersten Wicklungsorientierung und eine zweite Sekundärwicklungsgruppe mit ein oder mehreren Sekundärwicklungen (6b) mit einer zweiten Wicklungsorientierung aufweist, wobei mindesten zwei der Sekundärwicklungen (6a, 6b) galvanisch voneinander getrennt sind

3. Resonanter Konverter nach Anspruch 1,
   **dadurch gekennzeichnet,**
   **dass** der Transformator (4) eine erste Sekundärwicklungsgruppe mit ein oder mehreren Sekundärwicklungen (6a) mit einer ersten Wicklungsorientierung und eine zweite Sekundärwicklungsgruppe mit ein oder mehreren Sekundärwicklungen (6b) mit einer zweiten Wicklungsorientierung aufweist, wobei mindestens zwei der Sekundärwicklungen galvanisch miteinander gekoppelt sind.

4. Resonanter Konverter nach Anspruch 3,
   **dadurch gekennzeichnet,**
   **dass** die Sekundärwicklungen (6a, 6b) mit einem Massepotential gekoppelt sind.

5. Resonanter Konverter nach einem der Ansprüche 1 bis 4,
   **dadurch gekennzeichnet,**
   **dass** die Resonanzfrequenz des resonanten Konverters durch die Hauptinduktivität (Lh) und die Streuinduktivitäten (Lrp, Lrsa, Lrsb) des Transformators (4) sowie durch ein kapazitives Element (3) bestimmt wird.

6. Resonanter Konverter nach einem der Ansprüche 1 bis 5,
   **dadurch gekennzeichnet,**
   **dass** neben dem Transformator (4) mindestens ein zusätzliches induktives Element (L1, L2a, L2b) vorgesehen ist, das für die Resonanzfrequenz des resonanten Konverters mitbestimmend ist.

7. Resonanter Konverter nach einem der Ansprüche 1 bis 6,
   **dadurch gekennzeichnet,**
   **dass** der Konverter Schaltelemente (24, 25) zum Zerhacken einer Eingangsgleichspannung ($U_{DC}$) aufweist und dass eine Rückkopplungsschleife mit einer Regelschaltung (8) zur Regelung der Frequenz und des Tastgrades der zerhackten Eingangsgleichspannung (Us) vorgesehen ist.

8. Resonanter Konverter nach einem der Ansprüche 1 bis 7,
   **dadurch gekennzeichnet,**
   **dass** die Sekundärwicklungen (6a, 6b) des Transformators (4) jeweils über jeweils eine Diode (Da, Db) und ein Ausgangsfilter (Fa, Fb) mit den Konverterausgängen gekoppelt sind.

9. Resonanter Konverter nach einem der Ansprüche 1 bis 8,
   **dadurch gekennzeichnet,**
   **dass** verschiedene Verhältnisse von Ausgangsspannung zu Windungszahl bezüglich zugehöriger unterschiedliche Wicklungsorientierung aufweisender Sekundärwicklungen vorgesehen sind.

10. Resonanter Konverter nach einem der Ansprüche 1 bis 9,
    **dadurch gekennzeichnet, dass** im Fall des Vorliegens einer Gruppe mehrerer Sekundärwicklungen mit gleicher Wicklungsorientierung vorgesehen ist, nur aus einer der zugehörigen Ausgangsspannungen ein zur Regelung der Konverterausgangsspannungen vorgesehenes Meßsignal (Va, Vb) abzuleiten.

Fig.1

Fig.2

Fig.3A

Fig.3B

Fig.3C

Fig.4

Fig.5

Fig.6

Fig.7

Fig.8

Fig.9

Fig.10

Fig.11

Fig.12